# EUROPÄISCHE PATENTSCHRIFT

(11) **EP 1 516 382 B1**
(45) Veröffentlichungstag und Bekanntmachung des Hinweises auf die Patenterteilung: **24.05.2006**
(21) Anmeldenummer: 02787385.0
(22) Anmeldetag: 23.11.2002
(51) Int. Cl.: H01M 8/02, H01M 8/24

(54) **BIPOLARPLATTE AUS GRAPHIT**
BIPOLAR PLATE CONSISTING OF GRAPHITE
PLAQUE BIPOLAIRE EN GRAPHITE

(30) Priorität: 20.12.2001 DE 10162871
(43) Veröffentlichungstag der Anmeldung: 23.03.2005
(73) Patentinhaber: Forschungszentrum Jülich GmbH, 52425 Jülich (DE)
(72) Erfinder: DOHLE, Hendrik, 52224 Stolberg (DE); BEWER, Thomas, 52968 Aachen (DE); MERGEL, Jürgen, 52428 Jülich (DE); STOLTEN, Detlef, 52076 Aachen (DE)
(86) Internationale Anmeldenummer: PCT/DE2002/004304
(87) Internationale Veröffentlichungsnummer: WO 2003/054992

(56) Entgegenhaltungen:
- EP-A- 1 094 045
- WO-A-00/41260
- WO-A-02/069424
- US-A- 5 565 072

## Beschreibung

Die Erfindung betrifft eine bipolare Plattenanordnung mit bipolarer Platte aus Graphit für den Einsatz in einer Brennstoffzelle sowie verschiedene Verwendungsmöglichkeiten dieser bipolaren Platte.

### Stand der Technik

In Brennstoffzellen haben Bipolarplatten die Aufgabe, die Reaktanden homogen über die Elektroden zu verteilen. Zudem müssen sie langzeitstabil sein, eine gute Beständigkeit gegen Korrosion sowie eine gute elektronische Leitfähigkeit aufweisen. Ein weiteres Erfordernis ist eine kostengünstige Herstellung einerseits, und andererseits eine möglichst dünne Ausgestaltung der Platte, um ein geringes Volumen der Brennstoffzelle zu gewährleisten.

Es hat sich gezeigt, daß Metalle wie z. B. nichtrostender Edelstahl die Ansprüche nur teilweise erfüllen. Auf der Kathodenseite von Brennstoffzellen tritt regelmäßig leichte Korrosion auf, während die Anodenseite insbesondere von Direkt-Methanol-Brennstoffzellen (DMFC) unproblematischer ist.

Graphit hat sich als ein geeignetes Material für Bipolarplatten herausgestellt. Derartige Graphitplatten können beispielsweise durch Fräsen oder auch durch abformende Verfahren hergestellt werden. Nachteilig beim Stand der Technik ist, daß eine doppelseitige Bearbeitung notwendig ist. Im Falle des Spritzgießens ist das doppelseitige Einbringen einer Strömungsverteilerstruktur schwierig, wenn gleichzeitig die bipolare Platte dünn gehalten werden muss. Zum sicheren Entfernen der Platte aus der Spritzgießvorrichtung dürfen gewisse Materialstärken des Grundmaterials nicht unterschritten werden. Ein Richtwert für die Mindestmaterialstärke des Grundmaterials ist ca. 0,8 mm.

Ein weiterer Nachteil beim Einsatz solcher aus dem Stand der Technik bekannten Platten ist es, daß sich bei einem Brennstoffzellenstapel die Fertigungsungenauigkeiten (Toleranzen) der einzelnen Platten aufsummieren, so daß Teilbereiche der bipolaren Platte im zusammengebauten Zustand eine erhöhte Belastung erfahren. Dabei können sogar Brüche die Folge sein.

Es ist zudem bekannt, daß bei mit Wasserstoff betriebenen Brennstoffzellen Kühlzellen notwendig sind, um die entstehende Wärme auszukoppeln. Bei Direkt-Methanol-Brennstoffzellen mit flüssigem Anodenkreislauf sind Kühlzellen dagegen nicht notwendig, da hierbei der Wärmeaustrag über den Anodenlcreislauf erfolgen kann.

### Aufgabe und Lösung

Aufgabe der Erfindung ist es, eine einfach herzustellende bipolare Platte aus Graphit zu schaffen, mit der eine gute Gleichverteilung der Reaktanden bewerkstelligt werden kann, die eine dünne Bauweise erlaubt.

Die Aufgabe der Erfindung wird gelöst durch eine bipolare Plattenanordnung mit bipolarer Platte aus Graphit gemäß Hauptanspruch. Vorteilhafte Ausführungsformen der Erfindung finden sich in den darauf rückbezogenen Ansprüchen.

### Gegenstand der Erfindung

Die erfindungsgemäße bipolare Plattenanordnung enthält mindestens eine bipolare Platte aus Graphit. Sie weist auf einer ihrer Seiten eine Verteilerstruktur für die Verteilung eines Betriebsmittels auf. Die gegenüberliegende Seite der bipolaren Platte ist planar ausgestaltet. Eine solche bipolare Platte kann auf einfache Weise aus einer dickeren Graphitplatte hergestellt werden, indem auf eine Seite Verteilerstrukturen eingefräst oder geformt werden.

Als geeignete Verteilerstrukturen bieten sich beispielsweise parallele Kanäle, Mäander oder auch einzelne Stege in unterschiedlichen Anordnungen an. Diese bipolare Platte weist vorteilhaft eine nur sehr geringe Wandstärke auf, was bei einem Einsatz in einer Brennstoffzelle zu einer günstigen Baugeometrie führt. Typische Wandstärken liegen in einem Bereich von 1,6 bis 5 mm.

Um auch eine Verteilerstruktur auf der anderen planaren Seite der bipolaren Platte zu realisieren, kann dort vorteilhaft ein dünnes Netz angeordnet werden. So kann eine geringe Stärke der bipolaren Plattenanordnung bei gleichzeitig einfacher Herstellung erzielt werden. Ein Netz hat zudem den Vorteil, dass es Fertigungstoleranzen der graphitischen bipolaren Platte ausgleichen kann. Dadurch können Spannungen, die aufgrund von Bautoleranzen beim Aufbau eines Brennstoffzellenstapels entstehen würden, regelmäßig vermieden werden.

Beim Einsatz in einer Brennstoffzelle wird die bipolare Platte in einer Ausführungsform der Erfindung derart angeordnet, dass die graphitische Verteilerstruktur an die Kathode grenzt. Ein Netz sorgt auf der anderen Seite der bipolaren Platte für die Verteilung des Brennstoffs über die Anode. Bei einer Direkt-Methanol-Brennstoffzelle kann in dieser Ausführungsform das Netz gleichzeitig die Verteilung des Brennstoffes und des Kühlmediums übernehmen.

Der Vorteil der erfindungsgemäßen bipolaren Plattenanordnung ihrer einfachen Herstellung und ihrem flexiblen Einsatz. Zusammen mit einem einfachen Verteilernetz wird eine beidseitige Verteilerstruktur realisiert, die zudem ausgleichend auf Bautoleranzen wirkt. Mit dieser Anordnung können auf einfache Weise die Funktionen einer bipolaren Platte mit entsprechender Verteilung der Betriebsstoffe verwirklicht werden. Die erfindungsgemäße bipolare Platte ist sowohl für den Einsatz in einer mit Wasserstoff betriebenen, als auch in einer Direkt-Methanol-Brennstoffzelle geeignet.

### Spezieller Beschreibungsteil

Nachfolgend wird der Gegenstand der Erfindung anhand von Figuren näher erläutert, ohne daß der Gegenstand der Erfindung dadurch beschränkt wird.

Die Erfindung löst die Aufgabe dadurch, daß die bipolare Platte nur auf der einen Seite strukturiert ist und auf der anderen Seite im wesentlichen planar ist. In Kombination mit einem nachgiebigen Element kann sie vorteilhaft in einer Brennstoffzelle eingesetzt werden. Das zusätzliche nachgiebige Element, z. B. ein Metall- oder Graphitgewebe, hat die folgenden Funktionen:
- Strömungsverteilung
- elektronische Leitung
- Ausgleich der Fertigungsungenauigkeiten

Die besondere Ausgestaltung der erfindungsgemäßen bipolaren Platte besteht nun darin, daß sie sowohl in Direkt-Methanol-Brennstoffzellen als auch in mit Wasserstoff betriebenen Brennstoffzellen eingesetzt werden kann. Dabei übernimmt das Metallnetz die Aufgabe eines Strömungsverteilers für die Anodenseite.

Die bipolare Platte ist sowohl für den Einsatz in einer DMFC, als auch in einer Wasserstoff-Brennstoffzelle geeignet.

In den Figuren sind einige Ausführungsbeispiele der Erfindung dargestellt:

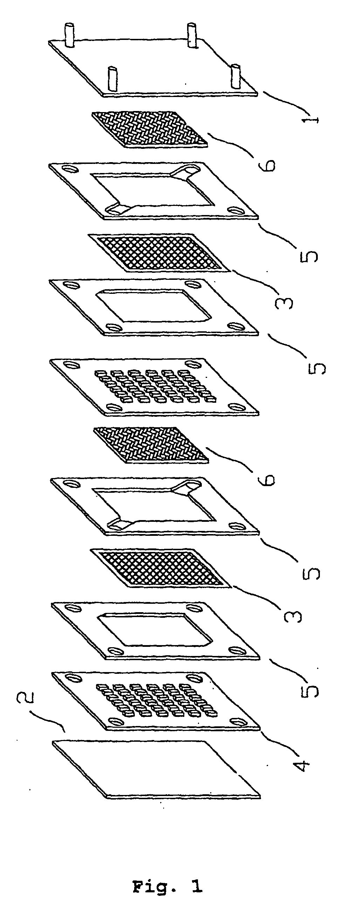

Die Fig. 1 zeigt einen DMFC-Stapel bestehend aus zwei einzelnen Zellen, die zwischen den Endplatten (1, 2) angeordnet sind. Die Membran-Elektroden-Einheiten (3) sind von der einen Seite her mit den Graphitplatten (4) und einem Dichtungselement (5) kontaktiert, auf der anderen Seite mit einem Drahtgewebe (6) sowie einer weiteren Dichtung (5).

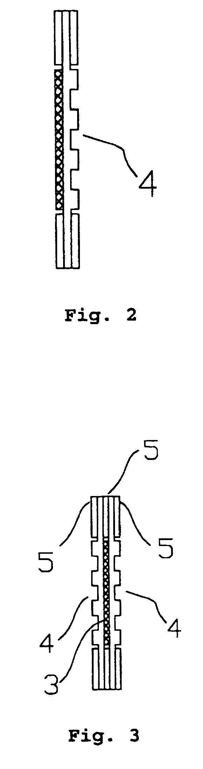

Den schematische Aufbau einer einzelnen bipolaren Platte ist in der Fig. 2 dargestellt.

Fig. 3 zeigt eine nicht erfindungsgemässe bipolare Plattenanordnung integrierter Kühlung für mit Wasserstoff betriebene Brennstoffzellen. Dabei übernimmt das Netz die Verteilerfunktion für das Kühlmedium.

## Patentansprüche

1. Bipolare Plattenanordnung mit einer bipolaren Platte aus Graphit für den Einsatz in einer Brennstoffzelle, mit einer Verteilerstruktur auf einer ersten Seite und einer planaren Oberfläche auf der der ersten Seite gegenüberliegenden Seite, **gekennzeichnet durch** ein Netz, welches auf der planaren Oberfläche der bipolaren Platte angeordnet ist.

2. Bipolare Plattenanordnung nach Anspruch 1 mit einer bipolaren Platte mit mehreren Stegen als Verteilerstruktur.

3. Bipolare Plattenanordnung nach vorhergehendem Anspruch 1 oder 2 mit einem Netz aus Edelstahl oder Graphitgewebe.

4. Brennstoffzelle umfassend wenigstens eine bipolare Plattenanordnung nach einem der Ansprüche 1 bis 3.

## Revendications

1. Dispositif à plaque bipolaire comprenant une plaque bipolaire en graphite à utiliser dans une pile à combustible, une structure formant répartiteur d'un côté et une surface plane du côté opposé au premier côté, **caractérisé par** un réseau qui est appliqué sur la surface plane de la plaque bipolaire.

2. Dispositif à plaque bipolaire suivant la revendication 1, comprenant une plaque bipolaire ayant plusieurs nervures comme structure formant répartiteur.

3. Dispositif à plaque bipolaire suivant la revendication 1 ou 2 précédentes, comprenant un réseau en acier fin ou une toile en graphite.

4. Pile à combustible, comprenant au moins un dispositif à plaque bipolaire suivant l'une des revendications 1 à 3.

## Claims

1. Bipolar plate arrangement with a bipolar plate consisting of graphite for use in a fuel cell, with a distributor structure on a first side and a planar surface on the side opposite to the first side, **characterised by** a network, which is arranged on the planar surface of the bipolar plate.

2. Bipolar plate arrangement according to claim 1 with a bipolar plate with several webs as the distributor structure.

3. Bipolar plate arrangement according to the foregoing claim 1 or 2 with a network consisting of stainless steel or graphite fabric.

4. Fuel cell encompassing at least one bipolar plate arrangement according to one of claims 1 to 3.
